# EUROPEAN PATENT SPECIFICATION

(11) **EP 3 762 174 B1**
(45) Date of publication and mention of the grant of the patent: **30.03.2022**
(21) Application number: 19707401.6
(22) Date of filing: 04.03.2019
(51) Int. Cl.: B23K 9/20, B08B 7/00, B23K 9/235

(54) **JOINING DEVICE FOR JOINING A STUD TO A WORKPIECE COMPRISING A PROTECTIVE GAS MOUTHPIECE**
VERBINDUNGSVORRICHTUNG MIT EINEM SCHUTZGASMUNDSTÜCK ZUM VERBINDEN EINES BOLZENS AN EIN WERKSTÜCK
DISPOSITIF DE JONCTION DE GOUJON SUR UNE PIECE COMPRENANT UN EMBOUT DE GAZ DE PROTECTION

(30) Priority: 06.03.2018 EP 18160082
(43) Date of publication of application: 13.01.2021
(73) Proprietor: Newfrey LLC, New Britain, CT 06053 (US)
(72) Inventor: REIS, Christian, 35394 Gießen (DE); EISSARA, Bah, 35394 Gießen (DE)
(74) Representative: SBD IPAdmin
(86) International application number: PCT/EP2019/055280
(87) International publication number: WO 2019/170588

(56) References cited:
- WO-A2-02/16051
- CN-A- 103 753 029
- US-A- 4 220 844
- US-A1- 2013 306 101
- US-A1- 2017 326 675

## Description

The present invention relates to a joining device for joining a stud to a workpiece, the joining device comprising a protective gas mouthpiece. The invention is used in particular for stud welding, but may also be implemented for other joining processes such as stud gluing for instance.

In stud welding, studs, which are provided, for example, with a thread, are joined or welded to a workpiece, such as for example a vehicle body panel. A significant field of application is in the car industry where various components are connected to one another, for example vehicle body parts, anchors for clips are connected to the chassis, etc., by means of studs which are provided with a thread.

Stud welding is a form of arc welding which is defined, inter alia, by the fact that very short welding processes are carried out with strong currents. During stud welding it is necessary to coordinate electric switching processes with mechanical movements of the stud in order to be able to handle the very rapid melting and solidification processes. Various resources are used to improve the welding process and the result. The use of a protective gas is one of the resources.

Typically, studs are fastened (for example welded) to a workpiece or part using a protective gas mouthpiece (also called nozzle) that contacts and/or seals against the workpiece or part to enclose the stud or fastening area within a sealed chamber (also called internal space) containing protective welding gas, such as argon. To be clear, notably for a welding process, this contact or sealing occurs during at least the pilot arc and main arc generating operations (not just the final stud plunging operation). The protective gas mouthpiece can thus adequately retain the protective gas during drawn arc stud welding, for example.

The workpieces onto which the studs are fastened or joined are frequently contaminated, for example by solid lubricant and/or deep-drawing oil, in particular as residue from previously carried out cold working processes. Such contamination(s) may damage the joining resulting from the joining process. It is therefore a need to reduce the contamination of the workpiece prior joining.

It is known from the prior art to conduct a cleaning process prior to the actual joining process.

A known method is to generate, prior to the generating of the welding arc at a relatively high current intensity, a cleaning arc, which has a lower current intensity, between the workpiece and the fastening element to be welded on. Thus, the welding surfaces located opposite each other, as a rule, are not yet melted. In this connection, on account of the emission of electrons, the component with negative polarity experiences a certain cleaning temperature rise which results in the combustion of the wetting substances. The residue of said combustion process is then deposited on the component with positive polarity if it does not immediately evaporate. By frequently changing polarity, the surfaces can consequently be cleaned well.

However, such method cannot be performed for all workpieces, and notably cannot be performed for thin workpieces with sheet thicknesses of, for example, less than or equal to 1 mm. Indeed, in such cases, there is a risk of frequent polarity changes leading to "root penetration", where the workpiece in the region of the welding surface is melted not only on the surface but directly through such that a hole is generated at this position and a stud weld connection is no longer possible.

CN103753029 (Basis of the preamble of claim 1) discloses a joining device and a method for joining a stud to a workpiece. A frictional pressure is applied between the stud and the workpiece to clean the joining surface before the joining process. Document EP2879831 discloses a cleaning method with the use of a cleaning electrode. The joining device comprising the cleaning electrode may be cumbersome in some situations. The integration of the cleaning electrode can be difficult and can lead to some obstruction.

It is hence an object of the present invention to at least alleviate the aforementioned shortcomings.

More particularly, it is an object of the present invention to provide a joining device having a protective gas mouthpiece which ensures a good joining quality under all conditions by making possible to pre-clean the surfaces of any workpiece without time-consuming cleaning steps and with a compact design.

To this end, the present invention is directed to a joining device for joining a stud to a workpiece as defined in claim 1, and comprising a stud holder operable for moving and holding the stud along a stud axis and a protective gas mouthpiece. The protective gas mouthpiece comprises a main body having an opening extending along a stud axis and adapted to receive a stud, and a supporting surface adapted to be arranged on the workpiece, wherein the main body delimits an internal space, into which a protective gas can be introduced for carrying out the joining process when the supporting surface rests on the workpiece. The protective gas mouthpiece additionally comprises a channel adapted to feed the protective gas from a feed unit into the internal space. The protective gas mouthpiece further comprises a cleaning unit having a plasma torch and adapted to locally supply a plasma jet on the surface of the workpiece, such that the plasma jet is adapted to clean the surface of the workpiece before the joining process, the cleaning unit being attached to the main body and connected to the internal space, and wherein the stud holder cooperates with the opening to drive the stud into the internal space to carry out a joining process.

The use of a plasma torch for cleaning the surface allows a good cleaning of workpieces like vehicle body panel. The integration of the cleaning device with the plasma torch in the mouthpiece allows to perform a compact joining device able to perform the cleaning step and the joining step one after the other without the need for the joining head to move between the two steps. Moreover, the integration of the cleaning device in the mouthpiece allows to direct the plasma jet exactly toward the surface on which the joining process is to be carried out, decreasing the risk of inexact motion of the joining head. A precise cleaning is thus realized exactly on the needed surface and no further action have to be taken (such as measurement of the clean surface, position of the clean surface ...). The manufacturing time is thus reduced.

According to an embodiment, the plasma torch longitudinally extends along a torch axis, and the torch axis is arranged inclined with regard to the stud axis. The inclination allows to avoid any obstruction by the cleaning unit during the joining process.

According to an embodiment, the angle between the plasma axis and the stud axis is between 30 and 60 degrees. More particularly a 40 degrees angle may be implemented. Such angles allows a focused plasma jet to realize the cleaning of the surface needed without obstructing the joining process. The plasma jet per se is distributed with for instance a 10 degrees angle.

According to an embodiment, the plasma torch comprises a plurality of plasma tubes, each plasma tube having a plasma outlet tube including a plasma exit aperture, and wherein the plasma exit aperture is connected to the internal space delimited by the main body. The plurality of tubes allow to form a circular cleaning surface which exactly corresponds to a circular flange of the stud for example.

According to an embodiment, a manifold including a plurality of channel extending through the main body for feeding the protective gas into the internal space is provided. The manifold may allow a good distribution and/or a quick feeding of the protective gas into the internal space.

According to an embodiment, the joining device further comprises an electric welding power source, and the stud is joined to the workpiece through arc welding. More particularly, the stud may be joined through drawn arc stud welding with the lift-ignition method.

According to an embodiment, the cleaning unit comprises a casing connected to the main body, and wherein the casing and the main body are used as a supporting foot. The supporting foot, realized by both the cleaning unit and the main body allows to exactly know the distance between the workpiece and the joining head (or stud) to realize a precise joining. The supporting foot is realized in this embodiment by existing foot, avoiding to provide further element which may be cumbersome. Thus, the joining device is compact without decreasing the joining properties.

According to an embodiment, the joining device further comprises a feed unit for feeding the protective gas into the internal space. The feed unit cooperate for instance with the channel.

According to an embodiment, the protective gas supplied by the feed unit is the same gas than the gas used in the cleaning unit. For instance a gas such as Argon can be used.

Other characteristics and advantages of the invention will readily appear from the following description of embodiments, provided as non-limitative examples, in reference to the accompanying drawings.

In the drawings:
Fig. 1 schematically shows a joining device for joining a stud to a workpiece with a stud holder and a protective gas mouthpiece according to a first embodiment;
Fig. 2 shows the protective gas mouthpiece of Fig. 1 with a main body defining an internal space and a cleaning unit having a plasma torch;
Fig. 3 schematically shows a joining device for joining a stud to a workpiece with a stud holder and a protective gas mouthpiece according to a second embodiment.

On the different figures, the same reference signs designate identical or similar elements.

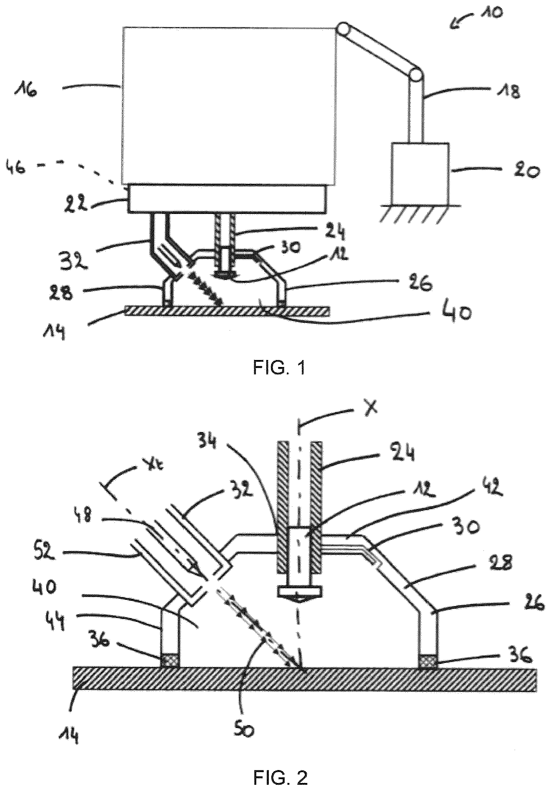

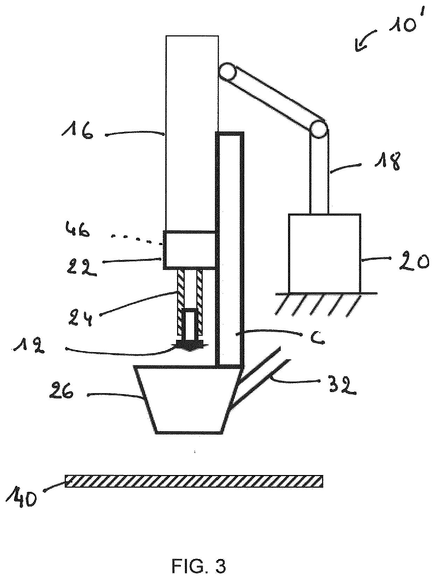

FIG. 1 and Fig. 3 show a schematic representation of two embodiments of a joining device 10, 10' according to the invention in the form of a stud welding apparatus. In another embodiment (not shown), the joining device may also be a stud bonding or stud gluing apparatus.

The joining device 10, 10' serves for example the purpose of welding fastening element, and more particularly studs 12, on workpieces 14 such as, for example, metal sheets. The stud and/or the workpiece can be produced from a metal material, for example steel or from a light metal material such as aluminium.

The stud 12, in a known manner, can have a flange on the underside of which a joining surface (more particularly a welding surface) is realized. A shank extends from the upper side of the flange. The flange and the shank are for example a one-piece element.

The joining device 10, 10' comprises a joining head 16 which can be guided, for example by a robot. The robot can have an articulated arm 18 on which the joining head 16 can be mounted. The joining head is thus able to be moved three-dimensionally in space in an extensively free manner. The joining head 16 may be supplied with a power source and/or controlled by a control source 20. The control and power source 20 can form one unit with a supply device. In addition, the joining device 10, 10' can have a stud supply device (not shown) which is arranged in a stationary manner and can be connected, for example, to the joining head 16 by means of a hose. As an alternative to this, the stud supply device can have a transfer station, from which the joining head 16 can fetch one or preferably a plurality of fastening elements which are then stored temporarily in a magazine of the joining head.

A joining tool 22 with a stud holder 24 is mounted on the joining head 16. The stud holder 24 is for example realized such that a stud 12 can be inserted into the stud holder and can be held securely during a joining process. The joining tool 22 may comprise additionally a drive device adapted to move the stud holder 24 along a stud axis in order to carry out the joining process (for example using the well-known lift-ignition method, which involves striking the arc by contacting the stud against the workpiece and then lifting it and drawing the arc). In case of arc-welding, an electric welding power source is provided.

The joining tool 22 may be fastened rigidly on the joining head. For example, the joining tool is mounted on a tool carrier which is mounted on the joining head 16 so as to be rotatable about an axis of rotation, which is aligned at right angles to the stud axis.

The joining device 10, 10' comprises a protective gas mouthpiece 26. The protective gas mouthpiece is adapted to be arranged around a joining element (for instance the stud 12 and stud holder 14) in order to allow a protective gas to be introduced in a chamber in order to improve the joining process.

The protective gas mouthpiece 26 comprises a main body 28, a channel 30 and a cleaning unit 32.

The main body 28 has an opening 34 extending along a stud axis X and is adapted to receive a stud holder 24.

The main body 28 further comprises a supporting surface 36 adapted to be arranged on the workpiece 14. The main body is for instance made of copper or copper alloy or plastic material, to avoid any magnetisation through alternating current, notably for stud welding devices.

The main body 28 defines or delimits an internal space 40, into which the stud 12 can be held during the joining process and into which a protective gas, for example Argon, can be introduced for carrying out the joining process, notably when the supporting surface rests again the workpiece.

More particularly, as depicted in Fig. 2, the protective gas mouthpiece comprises a base element 42, into which the opening is arranged. The opening 34 is designed to receive the stud holder and the stud. The opening 34 is for instance designed as a through opening. The main body 48 may have a frustro-conical shape, as depicted in Fig. 3 with the smallest diameter facing the workpiece. In another embodiment and as depicted in Fig. 1 and Fig. 2, the main body 48 has its biggest opening diameter facing the workpiece.

At the portion of the base element 42 facing forwards in a connection direction the base member 42 has a mouth 44 (forming lateral walls extending in the direction of the workpiece for example). The mouth 44 comprises the supporting surface 36, which is arranged at a free end of the mouth 44 and can be placed on the workpiece surface in such a manner that the internal space 40 is closed. In other words, the supporting surface surrounds the internal space, and the mouth and the based member delimit the internal space.

Generally protective gas (also known as a shield gas or inerting gas) can be supplied to the internal space 40 by a feed unit 46 in different manners. One channel 30 (as depicted in the drawings) or a plurality of supply channels (for example a manifold) are constructed in the main body. The protective gas supply flow is introduced into the internal space, and for example focused in direction of the stud.

The protective gas mouthpiece 26 further comprises as described above the cleaning unit 32, which is part of the mouthpiece and connected to the main body 28, such that a motion of the main body is transferred to the cleaning unit 32. The channel 30 is disconnected from the cleaning unit 32. For instance, a hole is created in the main body 28 to insert the cleaning unit 32. Thus, the cleaning unit 32 is fixedly secured to the main body 28. However, the cleaning unit 32 may be disconnected from the main body, for example for maintenance. The cleaning unit 32 is connected to the internal space. For instance, as illustrated in Fig. 1 or Fig. 2, the cleaning unit projects into the internal space.

The cleaning unit 32 comprises a plasma torch 48 (also called plasma jet torch). The plasma torch 48 may be inserted in the hole of the main body 28.

The plasma torch 48 acts in the cleaning unit as a rich source of ions and free radicals and other highly reactive substances. These substances can be carried in a fast-moving gaseous stream to a focused surface on the workpiece comprising contamination. The stream has an effect directly on the contaminations (for example oil film) on the workpiece without the need to transfer a substantial amount of thermal energy into the workpiece surface, which may cause an appreciable rise in its temperature (and damage or decrease the properties of the joining process).

The cleaning unit 32 (and more particularly the plasma torch 48) is thus adapted to locally supply a plasma jet 50 on a surface of the workpiece, such that the plasma jet can clean the surface of the workpiece before the factual joining process.

The plasma torch 48 extends longitudinally along a torch axis Xt. The torch axis Xt is inclined with regard to the stud axis X. More particularly, the torch axis is inclined with regard to the stud axis to an angle between 30 and 60 degrees. For instance, the torch axis is inclined with regard to the stud axis to an angle between 30 and 50 degrees. For example, the torch axis is inclined to an angle of about 40 degrees.

The plasma torch 48 can have one or a plurality of plasma tubes. Each plasma tube can have a plasma outlet tube including a plasma exit aperture. The plasma exit aperture is connected to the internal space. More particularly, the plasma exit aperture can protrude in the internal space.

A single plasma tube oriented along the torch axis enables the formation of an oval clean surface on the workpiece surface. A plurality of plasma tubes may be arranged evenly distributed or not around the torch axis and may allow the formation of a circular clean surface. The plasma jet 50 can expand in the internal space and the plasma jet 50 is delivered for instance with a 10 degrees angle.

Under "clean surface" it is to understand the surface of the workpiece 14 onto which a plasma jet is applied and which clean the contamination(s) on the surface before the joining (or welding) of the stud onto the surface. The joining of the stud is then realized in a joining area corresponding to the clean surface free of contamination. The flange of the stud is arranged facing the clean surface and the joining process (for example through arc-welding) is carried out to join the flange of the stud to the workpiece on the clean surface.

In order to determine the relative position between the stud and the workpiece (or surface of workpiece), it is known to attach a supporting foot to the joining head.

In the present embodiment, the cleaning unit 32 (more particularly the plasma torch 48) comprises a casing 52 connected to the main body, and the casing 52 and the main body 28 both form the supporting foot. Thus, the joining device 10, 10' does not need a further element to act as a supporting foot, since the function is fulfilled by the casing and the main body of the protective gas mouthpiece.

The protective gas supplied inside the internal space for carrying out the joining process and the gas used in the cleaning unit may be the same gas, for example the same inerting gas, such as Argon. Thus, only one gas source is necessary.

More particularly, in an embodiment, the cleaning unit 32 and the protective gas supply unit (with the feed unit 46) can be two different devices. In another embodiment, both the cleaning unit and the protective gas supply unit (with the feed unit 46) can be connected to each other.

In the embodiment of Fig. 1, the protective gas mouthpiece 26 and the stud holder 24 of the joining device 10 are attached to each other, such that during a welding process, the stud can translate to carry out the lift-ignition method, but the relative translation between the stud and the protective gas mouthpiece is of few millimetres, for example of 6 millimetres. The protective gas mouthpiece and the stud holder are thus mainly displaced together, notably by the articulated arm 18.

In the embodiment of Fig. 3, the protective gas mouthpiece 26 and the stud holder 24 of the joining device 10' are disconnected, such that the stud holder 24 (resp. the protective gas mouthpiece 26) can move, notably along the stud axis, independently from the mouthpiece 26 (resp. the stud holder 24). Thus, an additional motion of the protective gas mouthpiece 26 with the plasma torch 48 is created.

More particularly, the protective gas mouthpiece 26 can be displaced through a slide or a carriage C moved by an actuator in a first and in a second direction, opposite the first direction, and independently from the stud holder 24. The actuator and carriage are used additionally to the drive device adapted to move the stud holder along the stud axis for the lift-ignition method. The stroke of the slide or carriage can be for example of 50 millimetres. The actuator can be pneumatic, electric or hydraulic. Thus, it is possible to create a cleaning position, wherein the protective gas mouthpiece contacts the workpiece 14, but the stud 12 is either not in the internal space 40 or is held sufficiently remote from the workpiece 14, that the plasma jet 50 does not contact the stud or the stud 12 does not prevent a correct cleaning of the surface to be joined. Therefore, the plasma jet 50 does not meet the stud or stud holder. After a cleaning step, the stud holder with the stud 12 can be moved downward in a welding position (or more particularly a joining position) during which the joining process can be carried out. The carriage C may be connected to the joining head 16.

## Claims

1. Joining device (10, 10') for joining a stud (12) to a workpiece (14) comprising:
- a stud holder (24) operable for moving and holding the stud along a stud axis (X),
- a protective gas mouthpiece (26) comprising:
- a main body (28) having:
- an opening (34) extending along a stud axis (X) and adapted to receive a stud, and
- a supporting surface (36) adapted to be arranged on the workpiece (36);
wherein the main body (28) delimits an internal space (40), into which a protective gas can be introduced for carrying out the joining process when the supporting surface rests on the workpiece,
- a channel (30) adapted to feed the protective gas from a feed unit into the internal space,
wherein the stud holder cooperates with the opening to drive the stud into the internal space to carry out a joining process,
and **characterized in that** the protective gas mouthpiece further comprises a cleaning unit (32) having a plasma torch (48) and adapted to locally supply a plasma jet (50) on the surface of the workpiece, such that the plasma jet is adapted to clean the surface of the workpiece before the joining process, the cleaning unit (32) being attached to the main body (28) and connected to the internal space (40).

2. Joining device (10, 10') according to claim 1, wherein the plasma torch (48) longitudinally extends along a torch axis (Xt), and wherein the torch axis is arranged inclined with regard to the stud axis (X).

3. Joining device (10, 10') according to claim 1 or 2, wherein the angle between the torch axis (Xt) and the stud axis (X) is between 30 and 60 degrees.

4. Joining device (10, 10') according to any of claims 1 to 3, wherein the plasma torch (48) comprises a plurality of plasma tubes, each plasma tube having a plasma outlet tube including a plasma exit aperture, and wherein the plasma exit aperture is connected to the internal space (40) delimited by the main body.

5. Joining device (10, 10') according to any of claims 1 to 4, comprising a manifold including a plurality of channel extending through the main body for feeding the protective gas into the internal space.

6. Joining device (10, 10') according to any of claims 1 to 5, wherein the joining device further comprises an electric welding power source (20) for joining the stud to the workpiece through arc welding.

7. Joining device (10, 10') according to any of claims 1 to 6, wherein the cleaning unit (32) comprises a casing (52) connected to the main body (28), and wherein the casing and the main body are used as a supporting foot.

8. Joining device (10, 10') according to any of claims 1 to 7, further comprising a feed unit (46) for feeding the protective gas into the internal space (40).

9. Joining device (10, 10') according to claim 8, wherein the protective gas supplied by the feed unit (46) during the using of the joining device is the same gas than the gas used in the cleaning unit (32), and wherein the feed unit (46) and the cleaning unit (32) are two different units.

10. Joining device (10, 10') according to any of claims 1 to 9, wherein the protective gas mouthpiece (26) is movable relative to the stud holder (24).

11. Joining device (10, 10') according to claim 10, wherein the protective gas mouthpiece (26) is movable along the stud axis (X) in a first direction and in a second direction, opposite the first direction.

12. Joining device (10, 10') according to claim 10 or 11, wherein a carriage (C) connects the protective gas mouthpiece to the stud holder, such that the protective gas mouthpiece and the stud holder are movable from each other between a cleaning position, in which the plasma jet (50) does not meet the stud holder and a welding position, in which the stud holder extends in the internal space (40) and is adapted to be welded to the workpiece (14).

13. Joining device (10, 10') according to any of claims 1 to 12, wherein the main body (28) is made of copper or copper alloy.

## Patentansprüche

1. Verbindungsvorrichtung (10, 10') zum Verbinden eines Bolzens (12) mit einem Werkstück (14), umfassend:
- einen Bolzenhalter (24), der betriebsfähig ist zum Bewegen und Halten des Bolzens entlang einer Bolzenachse (X),
- ein Schutzgasmundstück (26), umfassend:
- einen Hauptkörper (28), der Folgendes aufweist:
- eine Öffnung (34), die sich entlang einer Bolzenachse (X) erstreckt und angepasst ist, um einen Bolzen aufzunehmen, und
- eine Stützfläche (36), die angepasst ist um auf dem Werkstück (36) angeordnet zu sein;
wobei der Hauptkörper (28) einen Innenraum (40) abgrenzt, in den zum Ausführen des Verbindungsprozesses, wenn die Stützfläche auf dem Werkstück ruht, ein Schutzgas eingeführt werden kann,
- einen Kanal (30), der angepasst ist, um das Schutzgas von einer Einspeisungseinheit in den Innenraum einzuspeisen,
wobei der Bolzenhalter mit der Öffnung kooperiert, um den Bolzen in den Innenraum zu treiben, um einen Verbindungsprozess auszuführen,
und **dadurch gekennzeichnet, dass** das Schutzgasmundstück weiter eine Reinigungseinheit (32) umfasst, die einen Plasmabrenner (48) aufweist und angepasst ist, um einen Plasmastrahl (50) lokal auf die Oberfläche des Werkstücks so abzugeben, dass der Plasmastrahl angepasst ist, um die Oberfläche des Werkstücks vor dem Verbindungsprozess zu reinigen, wobei die Reinigungseinheit (32) an dem Hauptkörper (28) befestigt und mit dem Innenraum (40) verbunden ist.

2. Verbindungsvorrichtung (10, 10') nach Anspruch 1, wobei sich der Plasmabrenner (48) der Länge nach entlang einer Brennerachse (Xt) erstreckt, und wobei die Brennerachse im Verhältnis zu der Bolzenachse (X) geneigt angeordnet ist.

3. Verbindungsvorrichtung (10, 10') nach Anspruch 1 oder 2, wobei der Winkel zwischen der Brennerachse (Xt) und der Bolzenachse (X) zwischen 30 und 60 Grad beträgt.

4. Verbindungsvorrichtung (10, 10') nach einem der Ansprüche 1 bis 3, wobei der Plasmabrenner (48) eine Vielzahl von Plasmarohren umfasst, wobei jedes Plasmarohr ein Plasmaauslassrohr aufweist, das eine Plasmaaustrittsöffnung aufweist, und wobei die Plasmaaustrittsöffnung mit dem Innenraum (40) verbunden ist, der von dem Hauptkörper abgrenzt ist.

5. Verbindungsvorrichtung (10, 10') nach einem der Ansprüche 1 bis 4, umfassend eine Verteilerleitung, die eine Vielzahl von Kanälen einschließt, die sich zum Einspeisen von Schutzgas in den Innenraum durch den Hauptkörper erstrecken.

6. Verbindungsvorrichtung (10, 10') nach einem der Ansprüche 1 bis 5, wobei die Verbindungsvorrichtung weiter eine elektrische Schweißstromquelle (20) zum Verbinden des Bolzens mit dem Werkstück durch Lichtbogenschweißen umfasst.

7. Verbindungsvorrichtung (10, 10') nach einem der Ansprüche 1 bis 6, wobei die Reinigungseinheit (32) ein Gehäuse (52) umfasst, das mit dem Hauptkörper (28) verbunden ist, und wobei das Gehäuse und der Hauptkörper als Stützfuß verwendet werden.

8. Verbindungsvorrichtung (10, 10') nach einem der Ansprüche 1 bis 7, weiter umfassend eine Einspeisungseinheit (46) zum Einspeisen des Schutzgases in den Innenraum (40).

9. Verbindungsvorrichtung (10,10') nach Anspruch 8, wobei das von der Einspeisungseinheit (46) während der Verwendung der Verbindungsvorrichtung eingespeiste Schutzgas das gleiche Gas ist, wie das Gas, das in der Reinigungseinheit (32) verwendet wird, und wobei die Einspeisungseinheit (46) und die Reinigungseinheit (32) zwei unterschiedliche Einheiten sind.

10. Verbindungsvorrichtung (10, 10') nach einem der Ansprüche 1 bis 9, wobei das Schutzgasmundstück (26) im Verhältnis zu dem Bolzenhalter (24) bewegbar ist.

11. Verbindungsvorrichtung (10, 10') nach Anspruch 10, wobei das Schutzgasmundstück (26) entlang der Bolzenachse (X) in eine erste Richtung und in eine zweite Richtung, die zu der ersten Richtung entgegengesetzt ist, bewegbar ist.

12. Verbindungsvorrichtung (10, 10') nach Anspruch 10 oder 11, wobei ein Wagen (C) das Schutzgasmundstück mit dem Bolzenhalter so verbindet, dass das Schutzgasmundstück und der Bolzenhalter voneinander zwischen einer Reinigungsposition, in der der Plasmastrahl (50) nicht den Bolzenhalter trifft, und einer Schweißposition, in der sich der Bolzenhalter in den Innenraum (40) erstreckt und angepasst ist, um an dem Werkstück (14) angeschweißt zu werden, bewegbar sind.

13. Verbindungsvorrichtung (10, 10') nach einem der Ansprüche 1 bis 12, wobei der Hauptkörper (28) aus Kupfer oder einer Kupferlegierung gefertigt ist.

## Revendications

1. Dispositif de jonction (10, 10') pour la jonction d'un goujon (12) à une pièce de travail (14) comprenant :
- un support de goujon (24) actionnable pour le déplacement et le maintien du goujon le long d'un axe de goujon (X),
- une embouchure pour gaz protecteur (26) comprenant :
- un corps principal (28) présentant :
- une ouverture (34) s'étendant le long d'un axe de goujon (X) et adaptée pour recevoir un goujon, et
- une surface de support (36) adaptée pour être agencée sur la pièce de travail (36) ;
dans lequel le corps principal (28) délimite un espace interne (40), dans lequel un gaz protecteur peut être introduit pour la réalisation du processus de jonction lorsque la surface de support repose contre la pièce de travail,
- un canal (30) adapté pour fournir le gaz protecteur depuis une unité de fourniture dans l'espace interne,
dans lequel le support de goujon coopère avec l'ouverture pour entraîner le goujon dans l'espace interne afin de réaliser un processus de jonction,
et **caractérisé en ce que** l'embouchure pour gaz protecteur comprend en outre une unité de nettoyage (32) présentant une torche à plasma (48) et adaptée pour fournir localement un jet de plasma (50) sur la surface de la pièce de travail, de sorte que le jet de plasma soit adapté pour nettoyer la surface de la pièce de travail avant le processus de jonction, l'unité de nettoyage (32) étant attachée au corps principal (28) et reliée à l'espace interne (40).

2. Dispositif de jonction (10, 10') selon la revendication 1, dans lequel la torche à plasma (48) s'étend longitudinalement le long d'un axe de torche (Xt), et dans lequel l'axe de torche est agencé incliné par rapport à l'axe de goujon (X).

3. Dispositif de jonction (10, 10') selon la revendication 1 ou 2, dans lequel l'angle entre l'axe de torche (Xt) et l'axe de goujon (X) est entre 30 et 60 degrés.

4. Dispositif de jonction (10, 10') selon l'une quelconque des revendications 1 à 3, dans lequel la torche à plasma (48) comprend une pluralité de tubes de plasma, chaque tube de plasma présentant un tube de sortie de plasma comportant une ouverture de sortie de plasma, et dans lequel l'ouverture de sortie de plasma est reliée à l'espace interne (40) délimité par le corps principal.

5. Dispositif de jonction (10, 10') selon l'une quelconque des revendications 1 à 4, comprenant un collecteur comportant une pluralité de canaux s'étendant à travers le corps principal pour fournir le gaz protecteur dans l'espace interne.

6. Dispositif de jonction (10, 10') selon l'une quelconque des revendications 1 à 5, dans lequel le dispositif de jonction comprend en outre une source d'énergie de soudage électrique (20) pour la jonction du goujon à la pièce de travail par soudage à l'arc.

7. Dispositif de jonction (10, 10') selon l'une quelconque des revendications 1 à 6, dans lequel l'unité de nettoyage (32) comprend un boîtier (52) relié au corps principal (28), et dans lequel le boîtier et le corps principal sont utilisés comme un pied de support.

8. Dispositif de jonction (10, 10') selon l'une quelconque des revendications 1 à 7, comprenant en outre une unité de fourniture (46) pour fournir le gaz protecteur dans l'espace interne (40).

9. Dispositif de jonction (10, 10') selon la revendication 8, dans lequel le gaz protecteur alimenté par l'unité d'alimentation (46) pendant l'utilisation du dispositif de jonction est le même gaz que le gaz utilisé dans l'unité de nettoyage (32), et dans lequel l'unité d'alimentation (46) et l'unité de nettoyage (32) sont deux unités différentes.

10. Dispositif de jonction (10, 10') selon l'une quelconque des revendications 1 à 9, dans lequel l'embouchure pour gaz protecteur (26) est mobile par rapport au support de goujon (24).

11. Dispositif de jonction (10, 10') selon la revendication 10, dans lequel l'embouchure pour gaz protecteur (26) est mobile le long de l'axe de goujon (X) dans une première direction et dans une seconde direction, opposée à la première direction.

12. Dispositif de jonction (10, 10') selon la revendication 10 ou 11, dans lequel un chariot (C) relie l'embouchure pour gaz protecteur au support de goujon, de sorte que l'embouchure pour gaz protecteur et le support de goujon soient mobiles l'un à partir de l'autre entre une position de nettoyage, dans laquelle le jet de plasma (50) n'atteint pas le support de goujon et une position de soudage, dans laquelle le support de goujon s'étend dans l'espace interne (40) et est adapté pour être soudé à la pièce de travail (14).

13. Dispositif de jonction (10, 10') selon l'une quelconque des revendications 1 à 12, dans lequel le corps principal (28) est fabriqué en cuivre ou alliage de cuivre.
